# EUROPEAN PATENT SPECIFICATION

(11) **EP 2 958 272 B1**
(45) Date of publication and mention of the grant of the patent: **27.12.2017**
(21) Application number: 14751472.3
(22) Date of filing: 03.02.2014
(51) Int. Cl.: H04L 12/28, H04B 3/54, H04M 11/00, H04L 12/721

(54) **POWER LINE CARRIER COMMUNICATION SYSTEM AND COMMUNICATION APPARATUS**
STROMLEITUNGS-TRÄGERKOMMUNIKATIONSSYSTEM UND KOMMUNIKATIONSVORRICHTUNG
SYSTÈME DE COMMUNICATION PAR COURANTS PORTEURS EN LIGNE ET APPAREIL DE COMMUNICATION

(30) Priority: 13.02.2013 JP 2013026132
(43) Date of publication of application: 23.12.2015
(73) Proprietor: Panasonic Intellectual Property Management Co., Ltd., Osaka-shi, Osaka 540-6207 (JP)
(72) Inventor: KOYAMA, Masaki, Osaka-shi Osaka 540-6207 (JP)
(74) Representative: Appelt, Christian W.
(86) International application number: PCT/JP2014/000550
(87) International publication number: WO 2014/125783

(56) References cited:
- EP-A1- 2 058 954
- JP-A- 2003 152 758
- JP-A- 2010 187 328

## Description

### Technical Field

The present invention relates to power line communication systems and communication devices, and in particular to a power line communication system establishing communication through power lines as communication paths and a communication device used in a power line communication system.

### Background Art

In the past, there have been proposed communication systems available for collecting data. For example, such communication systems establish communications between a master for collecting data and two or more slaves for providing the data.

For example, such communication systems are used to realize remote measurement system for collecting data indicative of energy consumptions of customers (see document 1 [JP 2010-187328 A1]).

Such communication systems are classified into a system using wired communication paths and a system using wireless communication paths.

EP 2 058 954 A1 describes a system, device, and method of using a power line communication device that is communicatively connected to a low voltage power line to establish communications with one or more electronic utility meters is provided. The method includes setting an encryption key parameter to a first encryption key used by the one or more electronic utility meters, establishing communications via one or more low voltage power lines with at least some of the utility meters using the first encryption key, assessing the quality of communications with at least some of the utility meters, transmitting communications quality data to a remote computer system; receiving information of one or more assigned meters from the remote computer system; and storing information of the assigned meters in memory.

Communication systems using wireless communication paths can offer advantages such as flexibility in plans of installing masters and slaves and facilitation of maintenance for communication failure.

In contrast, communication systems performing power line communication on power lines as wired communication paths offer advantage of being higher in communication reliability than the communication systems using wireless communication paths.

Note that, in the communication systems using wireless communication paths only, depending on installation locations or installation environments of masters and slaves, communication quality is likely to decrease to an extent that the masters cannot collect data from the slaves. In this case, it is necessary to go to a place where slaves are installed, and directly obtain data therefrom. Therefore, the communication systems using wireless communication paths only still have problems that time and effort in collection data cannot be reduced sufficiently.

In contrast, it is known that the communication systems using wired transmission paths based on power line communication techniques can ensure high stability in communication during operation, and offer higher communication reliability than the communication systems using wireless communication paths. Therefore, an undesired situation in which masters fail to obtain data from slaves hardly occurs.

As described above, the communication systems using power line communication techniques is higher in communication reliability than the communication systems using wireless communication paths. However, presence of step-down transformers or the like between the masters and the slaves is likely to cause decrease in the communication quality of the communication systems using power line communication techniques. Consequently, to ensure communication paths, couplers are required to be interposed in part of the power line in some cases.

In view of collection of data, the slaves should be placed in limited locations. Further, installation plans for the masters and couplers are needed to be made in accordance with the communication quality. To determine the installation plans for the masters and couplers, it is necessary to predict the communication quality based on system diagrams of power lines. This leads to problems that installation of the masters and couplers requires skills.

In view of the above circumstances, to ensure that the masters can collect data from the slaves, it has been proposed that the masters are individually placed in locations offering sufficient communication quality. This requires multiple masters and therefore leads to problems that the same slave is associated with two or more masters duplicatedly.

### Summary of Invention

The present invention has aimed to propose a power line communication system capable of including multiple masters and of associating each slave with one of the multiple masters, and to propose a communication device used in the power line communication system.

The power line communication system of the first aspect in accordance with the present invention includes: multiple slaves; multiple masters connected to the multiple slaves via one or more power lines; a detector; and a processor. Each of the multiple masters includes a storage circuit configured to store a set of identification information of slaves which are of the multiple slaves and are allowed to communicate with a master including this storage circuit, and is configured to communicate, via the one or more power lines, with one or more slaves identified by identification information contained in the set stored in the storage circuit thereof. The detector is configured to, when at least two sets of the sets stored in the storage circuits of the multiple masters contain same identification information in common, determine occurrence of duplication of identification information. The processor is configured to, when the detector determines the occurrence of the duplication, perform a process of associating each of the multiple slaves with any one of the multiple masters to eliminate the duplication.

In the power line communication system of the second aspect in accordance with the present invention, realized in combination with the first aspect, the processor is configured to, in the process, not delete the same identification information from one of the at least two sets but delete the same identification information from one or more remaining sets of the at least two sets.

In the power line communication system of the third aspect in accordance with the present invention, realized in combination with the first aspect, each of the multiple masters further includes an evaluation circuit configured to calculate one or more evaluation values in terms of communication quality for one or more slaves identified by identification information contained in the set stored in a storage circuit of a master including this evaluation circuit. The processor is configured to, in the process, not delete the same identification information from a set which is one of the at least two sets and is owned by a master which is largest in the evaluation value for the same identification information, but delete the same identification information from one or more remaining sets of the at least two sets.

In the power line communication system of the fourth aspect in accordance with the present invention, realized in combination with the first aspect, the processor is configured to, when two sets of the sets stored in the storage circuits of the multiple masters contain same identification information in common, delete the same identification information from only one of the two sets, in the process.

In the power line communication system of the fifth aspect in accordance with the present invention, realized in combination with the fourth aspect, each of the multiple masters further includes an evaluation circuit configured to calculate one or more evaluation values in terms of communication quality for one or more slaves identified by identification information contained in the set stored in a storage circuit of a master including this evaluation circuit. The processor is configured to, when two of the sets contain same identification information in common, delete the same identification information from a set which is one of the two sets and is owned by a master which is smaller in the evaluation value for the same identification information, in the process.

In the power line communication system of the sixth aspect in accordance with the present invention, realized in combination with the first aspect, the processor is configured to, in a case where the detector determines the occurrence of the duplication, when at least one of at least three sets of the sets stored in the storage circuits of the multiple masters is a subset of a union of remaining sets of the at least three sets, give an announcement that a master corresponding to the subset is omittable.

In the power line communication system of the seventh aspect in accordance with the present invention, realized in combination with the first aspect, the processor is configured to, in a case where the detector determines the occurrence of the duplication and where two sets of the sets stored in the storage circuits of the multiple masters contain same identification information in common, when one of the two sets is a subset of the other of the two sets, give an announcement that a master corresponding to the subset is omittable.

In the power line communication system of the eighth aspect in accordance with the present invention, realized in combination with the first aspect, in each of the multiple masters, the processor is configured to, when the detector determines the occurrence of the duplication, determine, based on the evaluation values of the multiple masters, whether a master corresponding to a particular one of the at least two sets is omittable if connection points of one or more masters corresponding to one or more remaining sets of the at least two sets to the one or more power lines are changed. The processor is configured to, when determining that the master corresponding to the particular one is omittable, give an announcement that the master corresponding to the particular one is omittable and changed connection points of the one or more masters corresponding to the one or more remaining sets.

In the power line communication system of the ninth aspect in accordance with the present invention, realized in combination with the first aspect, the power line communication system further includes an external device configured to communicate with each of the multiple masters. The external device includes an obtaining circuit configured to perform a request for the set to each of the multiple masters. Each of the multiple masters further includes a read-out circuit configured to read out the set from a storage circuit of a master including this read-out circuit in response to the request and send the set to the obtaining circuit. The external device includes a comprehensive storage circuit configured to store the set received by the obtaining circuit and further includes the detector and the processor. The detector is configured to determine occurrence of the duplication with regard to the sets stored in the comprehensive storage circuit.

In the power line communication system of the tenth aspect in accordance with the present invention, realized in combination with the first aspect, the multiple masters are configured to communicate with each other. At least one of the multiple masters includes: an obtaining circuit configured to perform a request for the set to each of the multiple masters; a comprehensive storage circuit configured to store the set received by the obtaining circuit; the detector; and the processor. Each of the multiple masters further includes a read-out circuit configured to read out the set from a storage circuit of a master including this read-out circuit in response to the request and send the set to the obtaining circuit. The detector is configured to determine occurrence of the duplication with regard to the sets stored in the comprehensive storage circuit.

In the power line communication system of the eleventh aspect in accordance with the present invention, realized in combination with any one of the first to tenth aspects, the identification information is unique to each of the multiple slaves.

The communication device of the twelfth aspect in accordance with the present invention is used, in a power line communication system including multiple slaves, multiple masters connected to the multiple slaves via one or more power lines, a detector, and a processor, as one of the multiple masters. Each of the multiple masters includes a storage circuit configured to store a set of identification information of slaves which are of the multiple slaves and are allowed to communicate with a master including this storage circuit, and is configured to communicate, via the one or more power lines, with one or more slaves identified by identification information contained in the set stored in the storage circuit thereof. The detector is configured to, when at least two of the sets stored in the storage circuits of the multiple masters contain same identification information in common, determine occurrence of duplication of identification information. The processor is configured to, when the detector determines the occurrence of the duplication, perform a process of associating each of the multiple slaves with any one of the multiple masters to eliminate the duplication.

In the communication device of the thirteenth aspect in accordance with the present invention, realized in combination with the twelfth aspect, the multiple masters are configured to communicate with each other. A particular master of the multiple masters includes: an obtaining circuit configured to perform a request for the set to each of the multiple masters: a comprehensive storage circuit configured to store the set received by the obtaining circuit; the detector; and the processor. Each of the multiple masters further includes a read-out circuit configured to read out the set from a storage circuit of a master including this read-out circuit in response to the request and send the set to the obtaining circuit. The detector is configured to determine occurrence of the duplication with regard to the sets stored in the comprehensive storage circuit. The communication device is used as the particular master.

### Brief Description of the Drawings

**FIG. 1** is a block diagram illustrating the power line communication system of **Embodiment 1.**
**FIG. 2** is a block diagram illustrating the whole structure of the power line communication system of **Embodiment 1.**
**FIG. 3** is an explanatory diagram illustrating a flow chart of operation of the processor used in the power line communication system of **Embodiment 1.**
**FIG. 4** is a diagram illustrating an example of duplication of identification information in the power line communication system of **Embodiment 1.**
FIG. 5 is a block diagram illustrating the power line communication system of **Embodiment 2.**

### Description of Embodiments

### (Embodiment 1)

The following embodiment relates to an example in which a power line communication system is used for remote measurement.

The remote measurement means that an upper device aggregates measured values from multiple meters (measurement devices) for measuring usage amounts of a resource supplied from a supplier through data communication. The resource may be selected from a group including electricity, gas, water (water supply), and heat. The supplier receives payment for usage amounts of the resource of customers based on the measured value of the meters.

The following description is made based on a supposition that the resource is electricity and the supplier is an electric company or a service provider. Note that, the service provider means: a business entity collecting payments for usage amounts of electricity on behalf of the electric company; a business entity managing usage amounts of electricity of customers; or the like.

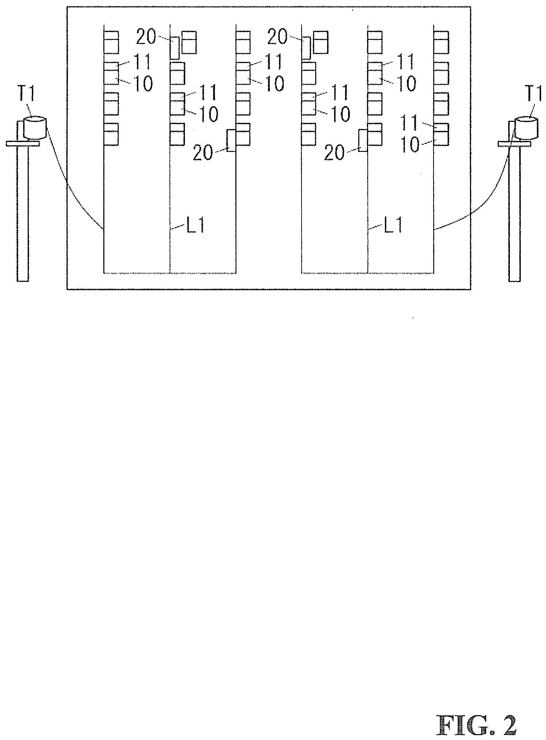

As shown in **FIG. 2****,** a meter **11** includes a slave **10** serving as a communication device for providing a measured value to an upper device **40.** Note that, the slave **10** may be accommodated in a casing of the meter **11,** or may include a casing different from the casing of the meter **11.** In other words, the slave **10** may be provided as part of the meter **11** or a separate part from the meter **11.**

The upper device **40** includes a management device (not shown) operated by an electric company or a service provider, and the management device is configured to receive measured values from the individual slaves **10.** Note that, the management device may be configured to communicate with the individual slaves 10 directly. However, actually, some communication signals cannot be received by the management device. Hence, one or more masters are necessary for relaying communication signals.

Even if the management device can communicate with the individual slaves 10 directly, a volume of communication traffic sent or received by the management device may increase with an increase in the number of slaves **10.** For this reason, multiple masters **20** which each have a function of communicating with multiple slaves **10** and a function of communicating with the management device are interposed between the management device and the slaves **10.**

Each master **20** has a function of receiving measured values from two or more slaves **10,** aggregating received measured values, and providing aggregated measured values to the management device. In other words, the master **20** functions as a concentrator.

One management device communicates with two or more masters **20.** To obtain measured values, normally it is sufficient for the management device to communicate with the masters **20.** Compared with a case where the management device communicates with the individual slaves **10,** a communication traffic volume can be reduced drastically.

When a request from the management device to the slaves **10** should be provided to all the slaves **10,** the master **20** sends the request to all the slaves **10** simultaneously. Or when the request is only for a specific slave **10,** the master **20** can allow such a request to pass therethrough.

By using these functions of the master **20,** the management device can individually provide requests for sending measured values to customers whose measured value cannot be obtained by the management device, and can provide instructions to start or stop power supply to a specific customer, for example.

With regard to a building where two or more customers live (e.g., a multiple dwelling, a commercial building, and a tenant building), one or more masters **20** are associated with such a building. Further, with regard to buildings in one-to-one correspondence to customers (e.g., a single dwelling), one master **20** is associated with two or more buildings.

When communication between the slave **10** and the master **20** is realized through a wireless communication path in which a transmission medium is a radio wave, there is an advantage that wiring work is unnecessary. Note that, in some installation environments, the slave **10** and the master **20** are less likely to communicate with each other.

When the wireless communication path is unavailable, or when a wired communication path is considered higher in communication quality than the wireless communication path, a technique of power line communication which uses a distribution network for supplying power to customers as a communication path may be used. Hereinafter, power line communication is referred to as "PLC" (PLC means Power Line Communication).

In the power line communication system of the present embodiment, an explanation is given to a configuration in which the master **20** and the slave **10** communicate with each other in a PLC technique in which the power line (distribution line) is used as the communication path.

As shown in **FIG. 2****,** multiple slaves **10** and multiple masters **20** are connected to a power line **L1.** Each master **20** can communicate with two or more slaves **10.** However, depending on a location of the master **20,** the master **20** can communicate with only one slave **10.**

The illustrated example shows a configuration example in which one or more masters 20 are connected to a power line **L1** on a secondary side of each step-down transformer **T1** such as a pole transformer. However, this configuration is optional, and couplers allowing passage of signals used in PLC may be provided between the power lines **L1 on** the secondary sides of multiple step-down transformers **T1,** and multiple slaves **10** connected to different power lines **L1** may communicate with one master **20.** Depending on specifications of signals used in PLC, a configuration in which the master **20** and the slave **10** communicate with each other via a path passing through the step-down transformer **T1** is available.

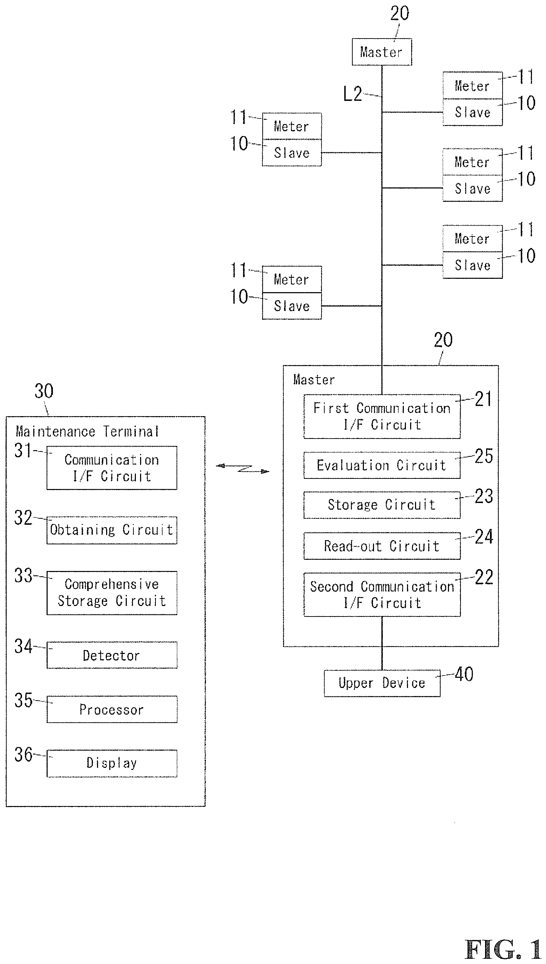

Hereinafter, the present embodiment is explained with reference to a model which has a simplified connection relation in order to simplify the explanation. In this model, as shown in **FIG. 1****,** multiple slaves **10** are connected to one power line **L2,** and a master **20** is connected to this power line **L2.** The power line **L2** in this model may include one or more step-down transformer T1 and/or one or more aforementioned couplers.

When sufficient communication quality can be ensured for all the slaves **10** by one master **20,** it is sufficient that only the master **20** exists. However, when sufficient communication quality cannot be ensured for one or some slaves **10** by one master **20,** it is required to install another master **20** in order to ensure sufficient communication quality for such one or more slaves **10.**

Note that, as shown in **FIG. 1****,** when two or more masters **20** are connected to the power line **L2,** one or some slaves **10** can communicate with two or more masters **20,** and such one or more slaves **10** provide the same measured values to different masters **20** redundantly. Hence, redundant traffic occurs in the power line **L2** used as the transmission path, and this may lead to a problem of narrowing a communication band.

To avoid this problem, it is desirable that each of the multiple slaves **10** connected to the power line **L2** be associated with only one of the multiple masters **20.** Further, it is desirable that a set of slaves **10** associated with the master **20** connected to the power line **L2** be equal to a set of slaves **10** connected to the power line **L2.** In short, it is required that all the slaves **10** connected to the power line **L2** are associated with any one of the multiple masters **20.** In other words, it is required that all the slaves **10** connected to the power line **L2** are associated with the multiple masters **20** mutually exclusive and collectively exhaustive.

The master **20** is a communication device, and includes a first communication interface circuit (hereinafter, communication interface circuit is referred to as "communication I/F circuit") **21** for communication with one or more slaves **10,** and a second communication I/F circuit **22** for communication with other devices.

Further, the master **20** includes: a storage circuit **23** for storing identification information of one or more slaves **10** which the master **20** can communicate with through the first communication I/F circuit **21;** and a read-out circuit **24** for reading out the identification information from the storage circuit **23.**

The storage circuit **23** stores the identification information (a set of identification information) of slaves **10** which are of the multiple slaves **10** (the multiple slaves **10** connected to the power line **L2**) and are allowed to communicate with the master **20** which the storage circuit **23** belongs to, for example. The master **20** uses the first communication I/F circuit **21** to communicate through the power line **L2** with the slave **10** identified by the identification information contained in the set stored in the storage circuit **23.**

For example, identification information of one or more slaves **10** which the master **20** can communicate with through the first communication I/F circuit **21** is preliminarily stored in the storage circuit **23.**

The read-out circuit **24** has a function of providing the identification information of slaves **10** to another device through the second communication I/F circuit **22.**

The master **20** is mainly constituted by hardware components including one or more devices (microcomputer) having a processor operating in accordance with programs and one or more devices for communication.

Note that, the second communication I/F circuit **22** means a communication I/F circuits for allowing communication between the read-out circuit **24** and another device. The specification of the second communication I/F circuit **22** may be appropriately changed according to a configuration of another device. Thus, the second communication I/F circuit **22** may include multiple communication I/F circuits.

Note that, in the present embodiment, another device may be a maintenance terminal **30** to be held by a worker performing installation of masters **20,** or the upper device **40** configured to communicate with masters **20.**

The maintenance terminal **30** and the upper device **40** are placed outside a communication network constructed by the slaves **10** and the masters **20,** and therefore hereinafter are referred to as external devices if necessary.

The identification information is uniquely allocated to each of the multiple slaves **10.** Note that, it is sufficient that the identification information of slaves **10** is unique with regard to the slaves **10** connected to the power line **L2.** When the system is used in the multiple dwelling, the identification information can be set based on a dwelling number, or may be set based on information for identifying customers. Or, unique numbers may be allocated to all the slaves **10** globally.

The configuration example shown in **FIG. 1** relates to a case where the maintenance terminal **30** to be held by a worker performing installation of masters **20** is used. Thus, the power line communication system shown in **FIG. 1** includes the multiple slaves **10,** multiple masters **20** connected to the multiple slaves **10** via the power line **L2,** and the maintenance terminal **30.**

The maintenance terminal **30** includes a communication I/F circuit **31** for communication with one or more masters **20.** Further, the maintenance terminal **30** includes: an obtaining circuit **32** configured to request the master **20** to read out all the identification information of slaves **10** stored in the storage circuit **23;** and a comprehensive storage circuit **33** configured to store the identification information obtained by the obtaining circuit **32.**

The obtaining circuit **32** is configured to perform a request a request for the set (set of identification information) stored in a storage circuit **23** to each of the multiple masters **20,** for example. In the present embodiment, the obtaining circuit **32** is configured to send the request to each of the multiple masters **20** through the communication I/F circuit **31.**

In the master **20,** the read-out circuit **24** is configured to read out the set from the storage circuit **23** in response to the request from the obtaining circuit **32** and send the set to the obtaining circuit **32.** In the present embodiment, the read-out circuit **24** is configured to send the set stored in the storage circuit **23** to the obtaining circuit **32** through the second communication I/F circuit **22.**

The comprehensive storage circuit **33** is configured to aggregate the identification information read out from the storage circuits **23** of the multiple masters **20** and store the identification information aggregated. In short, the comprehensive storage circuit **33** is configured to store the set received by the obtaining circuit **32.** As a result, the comprehensive storage circuit **33** stores the sets individually stored in the storage circuits **23** of the multiple masters **20.**

The maintenance terminal **30** includes: a detector **34** configured to detect duplication of the identification information of the slaves **10** stored in the comprehensive storage circuit **33;** and a processor **35** configured to, when the detector **34** detects the duplication of identification information, perform a process (changing process) of eliminating the duplication.

The detector **34** is configured to, when the sets of identification information obtained from different masters **20** contain the same identification information in common, determine occurrence of the duplication of identification information.

In more details, the detector **34** is configured to, when at least two sets of the sets stored in the storage circuits **23** of the multiple masters **20** contain same identification information in common, determine occurrence of duplication of identification information. In other words, the detector **34** determines whether an intersection which is not an empty set exists for each of combinations of the sets of identification information stored in the storage circuits **23** of the multiple masters **20.** When determining that an intersection which is not an empty set exists, the detector **34** determines occurrence of the duplication.

Further, the processor **35** is configured to, when the detector **34** detects the duplication of identification information, perform a process of associating every slave **10** with any one of the masters **20.** In other words, the processor **35** is configured to, when the detector **34** determines the occurrence of the duplication, perform a process of associating each of the multiple slaves **10** with any one of the multiple masters **20** to eliminate the duplication. In summary, when an intersection which is not an empty set exists, the processor **35** modifies the sets of identification information of the multiple masters **20** so that the intersection is an empty set.

The processor **35** performs the process of eliminating the duplication in steps explained below.

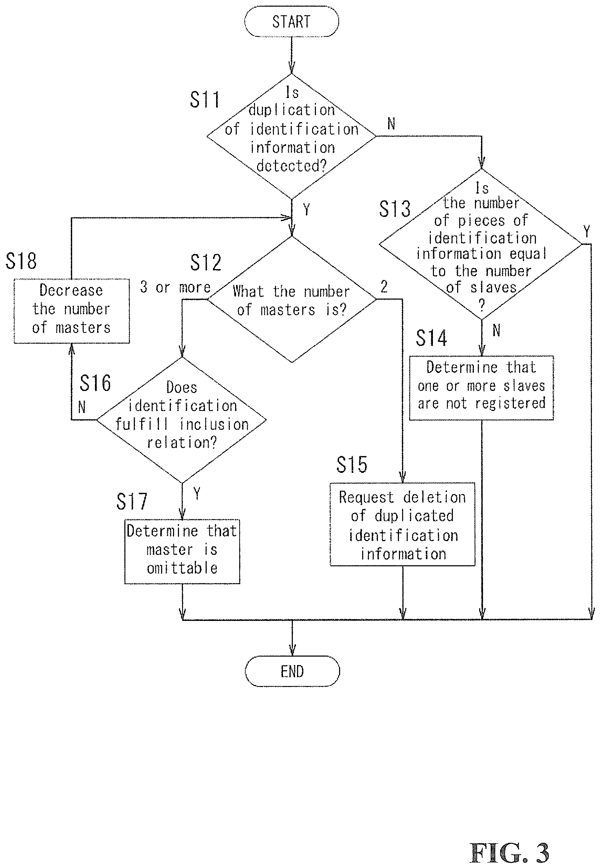

As shown in **FIG. 3****,** when the detector **34** detects the duplication of identification information (**S11:** Y), it is determined whether the number of masters **20** storing duplicated identification information is two, or three or more **(S12).**

When the detector **34** does not detect the duplication of identification information (**S11:** N), the processor **35** compares the preliminarily given number of slaves **10** with the number of pieces of identification information **(S13).** When the former is equal to the latter (**S13:** Y), the processor **35** maintains the current status. When the former is not equal to the latter (**S13:** N), the processor **35** determines that one or some of the slaves **10** are not associated with the masters **20 (S14).**

When the storage circuits **23** of only two masters **20** store the same identification information in common **(S12: 2),** the processor **35** requests one of the two masters **20** to delete the duplicated identification information from the storage circuit **23 (S15).**

In other words, the duplicated identification information is left in only one of the two masters **20.**

As described above, the processor **35** is configured to, when two sets of the sets stored in the storage circuits **23** of the multiple masters **20** contain same identification information in common, delete the same identification information from only one of the two sets.

In one example, the set of identification information of the first master **20** is represented by **ST1 = {I1, I2, I3, I4},** and the set of identification information of the second master **20** is represented by **ST2 = {I1, I5, I6, I7},** and the set of identification information of the third master **20** is represented by **ST3 = {I8, I9}.** Note that, **I1** to **I9** represent different pieces of identification information.

In this example, the two sets **ST1** and **ST2** of the sets **ST1, ST2,** and **ST3** stored in the three masters **20** contain the same identification information **I1** in common. Therefore, the same identification information **I1** is deleted from one of the two sets **ST1** and **ST2.**

In this regard, when communication quality between the masters **20** and the slaves **10** is obtained together with the identification information, it is desirable that the processor **35** delete the identification information from the master **20** which is lower in the communication quality.

In summary, the processor **35** is configured to, when two of the sets contain same identification information in common, delete the same identification information from a set which is one of the two sets and is owned by a master which is lower in an evaluation value for the same identification information. For instance, in the above example, when the first master **20** is higher in the evaluation value of the communication quality than the second master **20** with regard to the slave **10** identified by the identification information **I1,** the identification information **I1** is deleted from the set **ST2** of the second master **20,** and therefore the set **ST2** is changed to **{I5, I6, I7}.**

Note that, in order to evaluate communication quality regarding the slaves **10,** the master **20** includes an evaluation circuit **25** described later.

When the total number of masters **20** whose storage circuits **23** store duplicate identification information is 3 or more (**S12:** 3 or more), the processor **35** performs conditional judgement **(S16).**

In this conditional judgement, it is judged whether all the identification information stored in the storage circuit **23** of each of at least one of the three or more masters **20** containing duplicated identification information is contained in the sets of identification information stored in the storage circuits **23** of remaining ones of the three or more masters **20.**

In brief, the processor **35** is configured to determine whether all the identification information contained in one set of at least three sets stored in the storage circuit **23** of the multiple masters **20** is contained in the remaining sets of the at least three sets. In other words, the processor **35** is configured to determine whether at least one of at least three sets of the sets stored in the storage circuits **23** of the multiple masters **20** is a subset of a union of remaining sets of the at least three sets.

For example, when sets of identification information stored in three masters **20** are **ST1, ST2,** and **ST3,** it is determined whether a relation **of ST3 ⊂(ST1 + ST2)** is fulfilled. The symbol "+" denotes a union. Note that, the sets **ST1** and **ST2** may or may not contain the same identification information in common.

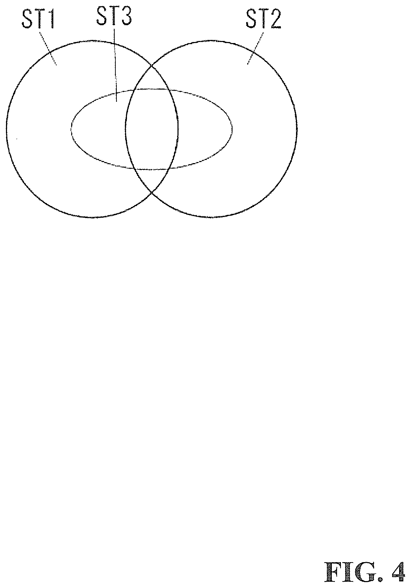

In this case, when the set **ST3** is omitted, all the identification information is still contained in the set **(ST1 + ST2).** **FIG. 4** shows a relation between the sets **ST1, ST2,** and **ST3.** Note that, **FIG. 4** shows an intersection of the sets **ST1** and **ST2.** The duplication of identification information contained in an intersection of the sets **ST1** and **ST2** is eliminated through the process including the steps **S11** to **S15.**

In the conditional judgement of step **S16,** if the condition is fulfilled (**S16:** Y), the processor **35** determines that any of the masters **20** is omittable **(S17).**

In one example, the set of identification information of the first master **20** is represented by **ST1 = {I1, I2, I3, I4},** and the set of identification information of the second master **20** is represented by **ST2 = {I5, I6, I7, I8, I9},** and the set of identification information of the third master **20** is represented by **ST3 = {I3, I4, I8, I9}.**

In this example, all the identification information **I3, I4, I8,** and **I9** contained in the set **ST3** which is one of the three sets **ST1, ST2,** and **ST3** is contained in the remaining sets **ST1** and **ST2.** Therefore, the set **ST3** is a subset of a union of the sets **ST1** and **ST2.** Consequently, the processor **35** decides that the master **20** (the third master **20**) corresponding to the set **ST3** is omittable.

If the condition is not fulfilled (**S16:** N), the processor **35** decreases the number of masters **20** of interest, by one **(S18),** and returns to step **S12** in order to perform the aforementioned process again.

In more detail, the processor **35** is configured to, when at least two sets of the sets stored in the multiple masters **20** contain same identification information in common, not delete the same identification information from one of the at least two sets but delete the same identification information from one or more remaining sets of the at least two sets.

In one example, the set of identification information of the first master **20** is represented by **ST1 = {I1, I2, I3, I4},** and the set of identification information of the second master **20** is represented by **ST2 = {I1, I5, I6, I7},** and the set of identification information of the third master **20** is represented by **ST3 = {I1, I8, I9}.**

In this example, the sets **ST1, ST2,** and **ST3** stored in the three masters **20** contain the same identification information **I1** in common. Therefore, for instance, the same identification information **I1** is not deleted from one **(ST1)** of the three sets **ST1, ST2,** and **ST3,** but the same identification information **I1** is deleted from the remaining sets **ST2** and **ST3.** As a result, the set **ST2** is changed to **{I5, I6, I7}** and the set **ST3** is changed to **{I8, I9}.**

Especially, the processor **35** is configured to, when at least two sets contain the same identification information, not delete the same identification information from the set which is of the at least two sets and is stored in the master 20 which is highest in the evaluation value in terms of the same identification information, but delete the same identification information from the remaining sets.

In the above example, when the third master **20** is higher than the first and second masters **20** in the evaluation value of the communication quality with regard to the slave **10** identified by the identification information **I1,** the same identification information **I1** is not deleted from the set **ST3** of the master **20** (the third master **20**) which is the highest in the evaluation value of the communication quality with regard to the same identification information **I1** of the three sets **ST1, ST2,** and **ST3,** but the same identification information **I1** is deleted from the remaining sets **ST1** and **ST2.** As a result, the set **ST1** is changed to **{I2, I3, I4},** and the set **ST2** is changed to **{I5, I6, I7}.**

The results of judgment at the steps **S14** and **S17** are outputted as notification signals from the processor **35** and are sent to a display **36** included in the maintenance terminal **30.**

The notification signal corresponding to the judgment result of the step **S14** indicates presence of a slave **10** which is not yet associated with any master **20.** The notification signal corresponding to the judgment result of the step **S17** indicates that one master **20** is omittable.

Note that, the notification signals may be also sent to devices for producing alarming sound and light in addition to the display **36,** and used to indicate presence of an omittable master **20.**

In the aforementioned process, it is judged whether one or more masters **20** of three or more of masters **20** of interest are omittable. In contrast, with regard to sets of identification information of slaves **10** stored in two masters **20,** also when one of the masters **20** has a set containing all elements of a set of the other of the masters **20,** a master **20** storing the identification information all of which are stored in the other master **20** is omittable.

In summary, the processor **35** may be configured to, in a case where two sets of the sets individually stored in the multiple masters **20** contain the same identification information in common, when one of the two sets is a subset of the other, give an announcement that a master 20 corresponding to the subset is omittable.

In one example, the set of identification information of the first master **20** is represented by **ST1 = {I1, I2},** and the set of identification information of the second master **20** is represented by **ST2 = {I1, I2, I5, I6, I7}.**

In this example, one **(ST1)** of the two sets **ST1** and **ST2** is a subset of the other **(ST2).** Therefore, the processor **35** decides that the master **20** (the first master **20**) corresponding to the subset **(ST1)** is omittable.

When the number of masters **20** capable of communicating with slaves **10** is increased, a problem that one slave **10** is associated with two or more masters **20** may occur. The above process performed by the processor **35** of the maintenance terminal **30** aims to solve this problem. In summary, the number of masters **20** is only changed without changing position of the masters **20** connected to the power line **L2.**

Note that, if any of the masters **20** is removed, it may be possible to associate all the slaves **10** with the remaining masters **20** by changing position of any of the multiple masters **20.**

For example, in the above steps, even if it is determined that three masters **20** are necessary for communication with all the slaves **10** connected to the power line **L2,** one master **20** may be unnecessary as a result of changing position of one master **20.**

As described above, the master **20** includes the evaluation circuit **25** configured to evaluate the communication quality with regard to the slave **10.**

The evaluation circuit **25** of the master evaluates communication quality for each of one or more slaves **10** which are of the slaves **10** connected to the power line **L2** and are allowed to communicate with the master, and thereby calculates an evaluation value corresponding to the communication quality. In other words, the evaluation circuit **25** is configured to calculate one or more evaluation values in terms of communication quality for one or more slaves **10** identified by identification information contained in the set stored in the storage circuit **23.**

Further, the evaluation value of the slave **10** calculated by the evaluation circuit **25** is associated with the identification information of the same slave **10** and is stored in the storage circuit **23.**

When the evaluation value regarding the communication quality is stored in the storage circuit **23** together with the identification information for each slave **10,** the read-out circuit **24** reads out the evaluation value and the identification information from the storage circuit **23** in response to the request from the maintenance terminal **30,** and the comprehensive storage circuit **33** stores the evaluation value and the identification information.

The processor **35** is configured to determine, based on the evaluation values, whether any of the masters **20** becomes omittable as a result of changing a connection point of at least one of two or more masters **20** containing duplicate identification information stored in the comprehensive storage circuit **33** to the power line **L2.** In other words, the processor **35** is configured to, when at least two sets of the sets individually stored in the multiple masters **20** contain the same identification information, determine, based on the evaluation values, whether a master **20** corresponding to a particular one of the at least two sets is omittable if one or more connection points of one or more masters **20** corresponding to one or more remaining sets of the at least two are changed, relative to the power line **L2.**

When it is possible to determine presence of the omittable master **20,** the processor **35** determines the omittable master **20** and further determines the master **20** to be moved and a destination of the master **20** to be moved. In other words, the processor **35** is configured to, when determining that the master **20** corresponding to the particular one is omittable, give an announcement that the master **20** corresponding to the particular one is omittable and changed connection points of the one or more masters **20** corresponding to the one or more remaining sets.

In this regard, determination of whether the master **20** is omittable is performed in the following steps.

First, the processor **35** refers to communication quality of each slave **10** with regard to each master **20,** and determines candidates for locations showing communication quality of slaves 10 which is higher than a predetermined criterion.

Thereafter, with regard to a case where a master **20** is placed in a location on the power line **L2** selected as a candidate (a vicinity of a slave **10** or a location between slaves **10**), the processor **35** determines, by simulation, whether a group of slaves **10** associated with a new master **20** and a group of slaves **10** associated with an original master **20** contain one or more same slaves **10** in common.

Additionally, it is determined in a similar manner to the above whether a group of one or more slaves **10** associate with to a master **20** newly placed in a location selected as a candidate and a group of one or more slaves **10** associated with one of existing masters **20** contain one or more same slaves **10** in common. When it is determined that two or more of existing masters **20** other than the newly placed master **20** are omittable, the notification signal indicative of the location of the newly added master **20** (a vicinity of a slave **10** or a location between slaves **10**) and locations of masters **20** determined to be omittable is outputted.

The notification signal is sent to the display **36** included in the maintenance terminal **30,** and therefore a user of the maintenance terminal **30** can know the omittable masters **20** and the master **20** which is to be placed after removal. Thus, the user of the maintenance terminal **30** can change position of any of the existing masters **20** and remove other one or more masters **20** based on information displayed on the display **36.**

Note that, the aforementioned steps are merely one example, and there is no intent to limit the process of the processor **35** by the aforementioned steps.

In the aforementioned configuration example, the maintenance terminal **30** uses the identification information of the slaves **10** stored in the storage circuits **23** of the masters **20,** and the maintenance terminal **30** manages the identification information to be stored in the masters **20.** Alternately or additionally, the upper device **40** capable of communicating with the masters **20** may be designed to have the same function as the aforementioned maintenance terminal **30,** and thereby the upper device **40** may offer the same function.

In other words, the upper device **40** may have functions equivalent to functions of the communication I/F circuit **31,** the obtaining circuit **32,** the comprehensive storage circuit 33, the detector **34,** and the processor **35.** In this case, the notification signals outputted from the processor **35** may be sent, through telecommunications circuits such as the Internet and mobile phone networks, to terminal devices (e.g., personal computers, smartphones, and tablets) to be held by users (workers).

The power line communication system of the aforementioned embodiment is a power line communication system in which the multiple masters **20** and the multiple slaves **10** communicate with each other through a communication path defined by the power line **L2.** The master **20** includes: the storage circuit **23** configured to store the identification information of one or more slaves **10** which are of the multiple slaves **10 and** are allowed to communicate with the master **20;** and the read-out circuit **24** configured to read out the identification information from the storage circuit **23.** The power line communication system includes the detector **34** configured to detect duplication with regard to the identification information read out by the read-out circuit **24** from each of the masters **20;** and the processor **35** configured to, when the detector **34** detects the duplication of the identification information, associate each of the multiple slaves **10** with any one of the multiple masters **20** so as to eliminate the duplication.

Further, in the power line communication system of the present embodiment, the processor **35** is configured to, when the detector **34** detects duplication of the identification information, perform a process of leaving the duplicated identification information in only the storage circuit **23** of one of two masters **20** whose storage circuits **23** store the same identification information in common, and of deleting the duplicated identification information from the storage circuit **23** of the other of the two masters **20.**

Further, in the power line communication system of the present embodiment, the processor **35** is configured to, in a case where the detector **34** detects duplication of the identification information, when all the identification information of the storage circuit **23** of at least one of three or more masters **20** whose storage circuits **23** store duplicate identification information is contained in a set of identification information stored in one or more storage circuits **23** of one or more remaining masters **20,** output the notification signal indicating that at least one master **20** is omittable.

Further, in the power line communication system of the present embodiment, the master **20** further includes the evaluation circuit **25** configured to calculate the evaluation value of the communication quality for each of one or more slaves **10** which are of the multiple slaves **10** and allowed to communicate with the master **20.** The storage circuit **23** stores the evaluation value in association with the identification information of the slave **10.** The read-out circuit **24** is configured to read out the evaluation value and the identification information from the storage circuit **23.** The processor **35** is configured to, when any of the multiple masters **20** becomes omittable as a result of changing position at which at least one of two or more masters **20** whose storage circuits **23** store duplicate identification information is connected to the power line **L2,** output a notification signal indicating that the master **20** is omittable and the changed position of the master **20.**

Further, in the power line **L2** communication system of the present embodiment, the detector **34** and the processor **35** are included in an external device (the upper device **40**) configured to communicate with the multiple masters **20.** The external device (the upper device **40**) includes: the obtaining circuit **32** configured to obtain the identification information read out by the read-out circuit **24** from the storage circuits **23** of the multiple masters **20;** and the comprehensive storage circuit **33** configured to aggregate and store the identification information obtained by the obtaining circuit **32.** The detector **34** and the processor **35** are configured to use the identification information stored in the comprehensive storage circuit **33.**

In conclusion, the power line communication system of the present embodiment includes the following first feature.

In the first feature, the power line communication system includes: multiple slaves **10;** multiple masters **20** connected to the multiple slaves **10** via one or more power lines **L2;** a detector **34;** and a processor **35.** Each of the multiple masters **20** includes a storage circuit **23** configured to store a set of identification information of slaves **10** which are of the multiple slaves **10** and are allowed to communicate therewith. Each of the multiple masters **20** is configured to communicate, via the one or more power lines **L2,** with one or more slaves **10** identified by identification information contained in the set stored in the storage circuit **23** thereof. The detector **34** is configured to, when at least two sets (two or more sets) of the sets stored in the storage circuits **23** of the multiple masters **20** contain same identification information in common, determine occurrence of duplication of identification information. The processor **35** is configured to, when the detector **34** determines the occurrence of the duplication, perform a process (modification process) of associating each of the multiple slaves 10 with any one of the multiple masters to eliminate the duplication.

Additionally, the power line communication system of the present embodiment includes the following second to eleventh features. Note that, the second to eleventh features are optional.

In the second feature realized in combination with the first feature, the processor **35** is configured to, in the process (modification process), not delete the same identification information from one of the at least two sets but delete the same identification information from one or more remaining sets of the at least two sets.

In the third feature realized in combination with the first feature, each of the multiple masters **20** further includes an evaluation circuit **25** configured to calculate one or more evaluation values in terms of communication quality for one or more slaves **10** identified by identification information contained in the set stored in a storage circuit **23** of a master **20** including this evaluation circuit **25.** The processor **35** is configured to, in the process (modification process), not delete the same identification information from a set which is one of the at least two sets and is owned by a master **20** which is largest in the evaluation value for the same identification information, but delete the same identification information from one or more remaining sets of the at least two sets.

In the fourth feature realized in combination with the first feature, the processor **35** is configured to, when two sets of the sets stored in the storage circuits **23** of the multiple masters **20** contain same identification information in common, delete the same identification information from only one of the two sets, in the process (modification process).

In the fifth feature realized in combination with the fourth feature, each of the multiple masters **20** further includes an evaluation circuit **25** configured to calculate one or more evaluation values in terms of communication quality for one or more slaves **10** identified by identification information contained in the set stored in a storage circuit **23** of a master **20** including this evaluation circuit **25.** The processor **35** is configured to, when two of the sets contain same identification information in common, delete the same identification information from a set which is one of the two sets and is owned by a master **20** which is smaller in the evaluation value for the same identification information, in the process (modification process).

In the sixth feature realized in combination with the first feature, the processor **35** is configured to, in a case where the detector **34** determines the occurrence of the duplication, when at least one of at least three sets of the sets stored in the storage circuits **23** of the multiple masters **20** is a subset of a union of remaining sets of the at least three sets, give an announcement that a master **20** corresponding to the subset is omittable.

In the seventh feature realized in combination with the first feature, the processor **35** is configured to, in a case where the detector **34** determines the occurrence of the duplication and where two sets of the sets stored in the storage circuits **23** of the multiple masters **20** contain same identification information in common, when one of the two sets is a subset of the other of the two sets, give an announcement that a master **20** corresponding to the subset is omittable.

In the eighth feature realized in combination with the first feature, in each of the multiple masters **20,** the processor **35** is configured to, when the detector **34** determines the occurrence of the duplication, determine, based on the evaluation values of the multiple masters **20,** whether a master **20** corresponding to a particular one of the at least two sets is omittable if connection points of one or more masters **20** corresponding to one or more remaining sets of the at least two sets to the one or more power lines are changed. The processor **35** is configured to, when determining that the master **20** corresponding to the particular one is omittable, give an announcement that the master **20** corresponding to the particular one is omittable and changed connection points of the one or more masters **20** corresponding to the one or more remaining sets.

In the ninth feature realized in combination with the first feature, the power line communication system further includes an external device (the maintenance terminal **30**) configured to communicate with each of the multiple masters **20.** The external device (the maintenance terminal **30**) includes: an obtaining circuit **32** configured to perform a request for the set to each of the multiple masters **20.** Each of the multiple masters **20** further includes a read-out circuit **24** configured to read out the set from a storage circuit **23** of a master **20** including this read-out circuit **24** in response to the request from the obtaining circuit **32** and send the set to the obtaining circuit **32.** The external device (the maintenance terminal **30**) includes a comprehensive storage circuit **33** configured to store the set received by the obtaining circuit **32,** and further includes the detector **34** and the processor **35.** The detector **34** is configured to determine occurrence of the duplication with regard to the sets stored in the comprehensive storage circuit **33.**

In the tenth feature realized in combination with any one of the first to tenth features, the identification information is unique to each of the multiple slaves **10.**

According to the power line communication system of the aforementioned present embodiment, the identification information of the slaves **10** stored in the multiple masters **20** is read out and it is determined whether duplication of the identification information occurs. When the duplication is determined to occur, the duplication is eliminated. Consequently, there is an advantage that the multiple masters **20** can be used and each slave **10** can be associated with one of the multiple masters **20.**

As described above, duplicate registration of a single slave **10** on storage circuits **23** of multiple masters **20** can be avoided. As a result, working efficiency in installing slaves **10** and masters 20 can be improved. Additionally, in a case where multiple masters **20** are installed, when at least one of the multiple masters **20** is omittable, this fact is notified of. Therefore, it is possible to reduce the number of masters **20,** and thus cost necessary for the power line communication system can be reduced.

Further, in the present embodiment, the master **20** is used in the aforementioned power line communication system. In other words, in the present embodiment, a communication device used as the master **20** includes the following eleventh feature.

In the eleventh feature, the communication device is used, in a power line communication including multiple slaves **10,** multiple masters **20** connected to the multiple slaves **10** via one or more power lines **L2,** a detector **28,** and a processor **29,** as one of the multiple masters **20.** Each of the multiple masters **20** includes a storage circuit **23** configured to store a set of identification information of slaves **10** which are of the multiple slaves **10** and are allowed to communicate with a master including this storage circuit, and is configured to communicate, via the one or more power lines **L2,** with one or more slaves **10** identified by identification information contained in the set stored in the storage circuit **23** thereof. The detector **28** is configured to, when at least two of the sets stored in the storage circuits **23** of the multiple masters **20** contain same identification information in common, determine occurrence of duplication of identification information. The processor **29** is configured to, when the detector **28** determines the occurrence of the duplication, perform a process of associating each of the multiple slaves **10** with any one of the multiple masters **20** to eliminate the duplication.

### (Embodiment 2)

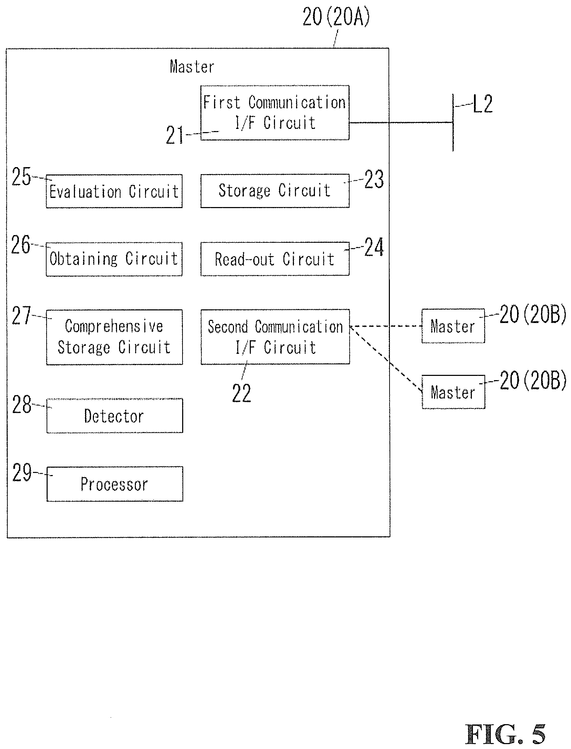

In the configuration example described with reference to **Embodiment 1,** the external device which is the maintenance terminal **30** or the upper device **40** obtains the identification information of slaves **10** stored in the storage circuit **23** of the master **20,** and then aggregates the identification information of slaves **10** held by the multiple masters **20.** In contrast, in the present embodiment, as shown in **FIG. 5****,** it is explained that the multiple masters **20** cooperate with each other without the external device, and at least one master **20 (20A)** aggregates the identification information of the slaves **10** held in the multiple masters **20.**

The masters **20** communicate with each other through the second communication I/F circuits **22.** In short, the second communication I/F circuit **22** serves as a mutual communication circuit for allowing mutual communication between the masters **20.** In the present embodiment, the master **20** (particular master **20A**) is designed to have same functions as the obtaining circuit **32,** the comprehensive storage circuit **33,** the detector **34,** and the processor **35** which are described with reference to **Embodiment 1.** In other words, in the present embodiment, at least one of the multiple masters **20** includes an obtaining circuit **26,** a comprehensive storage circuit **27,** a detector **28,** and a processor **29** which respectively corresponds to the obtaining circuit **32,** the comprehensive storage circuit **33,** the detector **34,** and the processor **35** described above. Note that, each of all the multiple masters **20** may include the obtaining circuit **26,** the comprehensive storage circuit **27,** the detector **28,** and the processor **29.**

In more detail, as shown in **FIG. 5****,** the master **20** (particular master **20A**) includes the obtaining circuit **26.** The obtaining circuit **26** is configured to request for obtaining information stored in a storage circuit **23** of a different master (another master **20 (20B)**) which is different from the master including the obtaining circuit **26,** to the read-out circuit **24** of the different master, through the second communication I/F circuit **22.** Further, the obtaining circuit **26** is configured to also request for information stored in the storage circuit **23** of the master including the obtaining circuit **26,** to the read-out circuit **24** of the master including the obtaining circuit **26.**

The master **20 (20A)** includes the comprehensive storage circuit **27,** and the comprehensive storage circuit **27** aggregates and stores information obtained by the obtaining circuit **26** from the read-out circuits **24** of the master including the comprehensive storage circuit **27** and the other masters. The other masters may be selected from masters with which the master of interest can communicate. Note that, it is preferable that the master **20 (20A)** be designed to have a function of performing multihop communication and aggregate information obtained from masters **20 (20B)** allowed to communicate with the master of interest within a predetermined hop number (about several hops).

The information obtained by the obtaining circuit **26** is the identification information of the slave **10,** or the identification information and the evaluation value of the communication quality of the slave **10.** The following explanation is made to a case where the information obtained by the obtaining circuit **26** is the identification information of the slave **10.** With regard to a case where the information obtained by the obtaining circuit **26** is the identification information and the evaluation value of the communication quality of the slave **10,** the same technique as the case described with reference to **Embodiment 1** in terms of the maintenance terminal **30** can be applied.

The master **20 (20A)** includes the detector **28** configured to detect duplication of the identification information of slaves **10** stored in the comprehensive storage circuit **27.** Further, the master **20 (20A)** includes the processor **29** configured to, when the detector **28** detects duplication of the identification information, perform a process of eliminating the duplication.

Operations of the detector **28** and the processor **29** are same as operations of the detector **34** and the processor **35** described with reference to **Embodiment 1.** Therefore, each of all the slaves 10 is associated with only one master **20.**

The processor **29** has a function of determining whether the number of masters **20** can be reduced. When the processor **29** determines that the number of masters **20** can be reduced, the notification signal is sent to the maintenance terminal 30 or the upper device **40.** When the notification signal is sent to the upper device **40,** this notification signal is further sent, through telecommunications circuits such as the Internet and mobile phone networks, to terminal devices (e.g., personal computers, smartphones, and tablets) to be held by users (workers). Other components and operations are same as those of Embodiment 1.

In the power line communication system of the aforementioned present embodiment, the master **20 (20A)** includes: the detector **28;** the processor **29;** the mutual communication circuit (second communication I/F circuit) **22** for allowing mutual communication between the masters **20;** the obtaining circuit **26** configured to obtain, through the mutual communication circuit **22** from a different master **20 (20B),** the identification information read out by the read-out circuit **24** from the storage circuit **23** of the different master **20;** and the comprehensive storage circuit **27** configured to aggregate the identification information obtained by the obtaining circuit **26.** The detector **28** and the processor **29** use the identification information stored in the comprehensive storage circuit **27.**

In other words, the power line communication system of the present embodiment includes the following twelfth feature in addition to the first feature. Note that, the power line communication system of the present embodiment further may include one or more of the second to eighth, and tenth features.

In the twelfth feature realized in combination with the first feature, the multiple masters **20** are configured to communicate with each other. At least one (master **20A**) of the multiple masters **20** includes: an obtaining circuit **26** configured to perform a request for the set to each of the multiple masters **20;** a comprehensive storage circuit **27** configured to store the set received by the obtaining circuit **26;** the detector **28;** and the processor **29.** Each of the multiple masters **20** further includes a read-out circuit **24** configured to read out the set from a storage circuit **23** of the master **20** including the read-out circuit **24** in response to the request and send the set to the obtaining circuit **26.** The detector **28** is configured to determine occurrence of the duplication with regard to the sets stored in the comprehensive storage circuit **27.**

According to the power line communication system of the aforementioned present embodiment, the identification information of the slaves **10** stored in the multiple masters **20** is read out and it is determined whether duplication of the identification information occurs. When the duplication is determined to occur, the duplication is eliminated. Consequently, there is an advantage that the multiple masters **20** can be used and each slave **10** can be associated with one of the multiple masters **20.**

Further, in the present embodiment, the master **20** is used in the aforementioned power line communication system. In other words, in the present embodiment, the communication device used as the master **20** includes the following thirteenth feature.

In the thirteenth feature realized in combination with the eleventh feature, the multiple masters **20** are configured to communicate with each other. A particular master **20 (20A)** of the multiple masters **20** includes: an obtaining circuit **26** configured to perform a request for the set to each of the multiple masters **20;** a comprehensive storage circuit **27** configured to store the set received by the obtaining circuit **26;** the detector **28;** and the processor **29.** Each of the multiple masters **20** further includes a read-out circuit **24** configured to read out the set from a storage circuit **23** of a master **20** including this read-out circuit **24** in response to the request and send the set to the obtaining circuit **26.** The detector **28** is configured to determine occurrence of the duplication with regard to the sets stored in the comprehensive storage circuit **27.** The communication device is used as the particular master **20A.**

## Claims

1. A power line communication system, comprising:
multiple slaves (10);
multiple masters (20) connected to the multiple slaves (10) via one or more power lines (L2);
a detector (28; 34); and
a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two sets of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
the processor (29; 35) is configured to, in a case where the detector (28; 34) determines the occurrence of the duplication, when at least one of at least three sets of the sets stored in the storage circuits (23) of the multiple masters (20) is a subset of a union of remaining sets of the at least three sets, give an announcement that a master (20) corresponding to the subset is omittable.

2. A power line communication system, comprising:
multiple slaves (10);
multiple masters (20) connected to the multiple slaves (10) via one or more power lines (L2);
a detector (28; 34); and
a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two sets of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
the processor (29; 35) is configured to, in a case where the detector (28; 34) determines the occurrence of the duplication and where two sets of the sets stored in the storage circuits (23) of the multiple masters (20) contain same identification information in common, when one of the two sets is a subset of the other of the two sets, give an announcement that a master (20) corresponding to the subset is omittable.

3. A power line communication system, comprising:
multiple slaves (10);
multiple masters (20) connected to the multiple slaves (10) via one or more power lines (L2);
a detector (28; 34); and
a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two sets of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
each of the multiple masters (20) further includes an evaluation circuit (25) configured to calculate one or more evaluation values in terms of communication quality for one or more slaves (10) identified by identification information contained in the set stored in a storage circuit (23) of a master (20) including this evaluation circuit (25);
the processor (29; 35) is configured to, when the detector (28; 34) determines the occurrence of the duplication, perform a determination of whether a master (20) is omittable, including:
referring to the communication quality of each slave (10) with regard to each master (20) and determine candidates for locations showing communication quality of slaves which is higher than a predetermined criterion, and
determine whether a group of slaves (10) associated with a new master (20), which is placed in a location on the one or more power lines (L2) selected as a candidate, and a group of slaves (10) associated with an original master (20) contain one or more same slaves (10) in common, and whether a group of one or more slaves (10) associated with a master (20) newly placed in a location selected as a candidate and a group of one or more slaves (10) associated with one of existing masters (20) contain one or more same slaves (10) in common; and
the processor (29; 35) is configured to, in case two or more of existing masters (20) other than the newly placed master (20) are determined to be omittable, output a notification signal indicative of the location of the newly added master (20) and locations of masters (20) determined to be omittable.

4. The power line communication system according to any one of claims 1 to 3, wherein
the processor (29; 35) is configured to, in the process, not delete the same identification information from one of the at least two sets but delete the same identification information from one or more remaining sets of the at least two sets.

5. The power line communication system according to any one of claims 1 to 4, wherein:
each of the multiple masters (20) further includes an evaluation circuit (25) configured to calculate one or more evaluation values in terms of communication quality for one or more slaves (10) identified by identification information contained in the set stored in a storage circuit (23) of a master (20) including this evaluation circuit (25); and
the processor (29; 35) is configured to, in the process, not delete the same identification information from a set which is one of the at least two sets and is owned by a master (20) which is largest in the evaluation value for the same identification information, but delete the same identification information from one or more remaining sets of the at least two sets.

6. The power line communication system according to any one of claims 1 to 5, wherein:
the processor (29; 35) is configured to, when two sets of the sets stored in the storage circuits (23) of the multiple masters (20) contain same identification information in common, delete the same identification information from only one of the two sets, in the process.

7. The power line communication system according to claim 6, wherein:
each of the multiple masters (20) further includes an evaluation circuit (25) configured to calculate one or more evaluation values in terms of communication quality for one or more slaves (10) identified by identification information contained in the set stored in a storage circuit (23) of a master (20) including this evaluation circuit (25); and
the processor (29; 35) is configured to, when two of the sets contain same identification information in common, delete the same identification information from a set which is one of the two sets and is owned by a master (20) which is smaller in the evaluation value for the same identification information, in the process.

8. The power line communication system according to any one of claims 1 to 7, further comprising an external device configured to communicate with each of the multiple masters (20),
the external device including:
an obtaining circuit (26; 32) configured to perform a request for the set to each of the multiple masters (20);
a comprehensive storage circuit (27; 33) configured to store the set received by the obtaining circuit (26; 32);
the detector (28; 34); and
the processor (29; 35),
each of the multiple masters (20) further including a read-out circuit (24) configured to read out the set from a storage circuit (23) of a master (20) including this read-out circuit (24) in response to the request from the obtaining circuit (26; 32) and send the set to the obtaining circuit (26; 32), and
the detector (28; 34) being configured to determine occurrence of the duplication with regard to the sets stored in the comprehensive storage circuit (27; 33).

9. The power line communication system according to any one of claims 1 to 7, wherein:
the multiple masters (20) are configured to communicate with each other;
at least one of the multiple masters (20) includes
an obtaining circuit (26; 32) configured to perform a request for the set to each of the multiple masters (20),
a comprehensive storage circuit (27; 33) configured to store the set received by the obtaining circuit (26; 32),
the detector (28; 34), and
the processor (29; 35);
each of the multiple masters (20) further includes a read-out circuit (24) configured to read out the set from a storage circuit (23) of a master (20) including this read-out circuit (24) in response to the request and send the set to the obtaining circuit (26; 32); and
the detector (28; 34) is configured to determine occurrence of the duplication with regard to the sets stored in the comprehensive storage circuit (27; 33).

10. The power line communication system according to any one of claims 1 to 9, wherein the identification information is unique to each of the multiple slaves (10).

11. A communication device used as one of multiple masters (20) of a power line communication system,
the power line communication system including multiple slaves (10), the multiple masters (20) connected to the multiple slaves (10) via one or more power lines (L2), a detector (28; 34), and a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
the processor (29; 35) is configured to, in a case where the detector (28; 34) determines the occurrence of the duplication, when at least one of at least three sets of the sets stored in the storage circuits (23) of the multiple masters (20) is a subset of a union of remaining sets of the at least three sets, give an announcement that a master (20) corresponding to the subset is omittable.

12. A communication device used as one of multiple masters (20) of a power line communication system,
the power line communication system including multiple slaves (10), the multiple masters (20) connected to the multiple slaves (10) via one or more power lines (L2), a detector (28; 34), and a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
the processor (29; 35) is configured to, in a case where the detector (28; 34) determines the occurrence of the duplication and where two sets of the sets stored in the storage circuits (23) of the multiple masters (20) contain same identification information in common, when one of the two sets is a subset of the other of the two sets, give an announcement that a master (20) corresponding to the subset is omittable.

13. A communication device used as one of multiple masters (20) of a power line communication system,
the power line communication system including multiple slaves (10), the multiple masters (20) connected to the multiple slaves (10) via one or more power lines (L2), a detector (28; 34), and a processor (29; 35),
each of the multiple masters (20) including a storage circuit (23) configured to store a set of identification information of slaves (10) which are of the multiple slaves (10) and are allowed to communicate with a master (20) including this storage circuit (23), being configured to communicate, via the one or more power lines (L2), with one or more slaves (10) identified by identification information contained in the set stored in the storage circuit (23) thereof,
the detector (28; 34) being configured to, when at least two of the sets stored in the storage circuits (23) of the multiple masters (20) contain same identification information in common, determine occurrence of duplication of identification information, and
the processor (29; 35) being configured to, when the detector (28; 34) determines the occurrence of the duplication, perform a process of associating each of the multiple slaves (10) with any one of the multiple masters (20) to eliminate the duplication,
**characterized in that**
each of the multiple masters (20) further includes an evaluation circuit (25) configured to calculate one or more evaluation values in terms of communication quality for one or more slaves (10) identified by identification information contained in the set stored in a storage circuit (23) of a master (20) including this evaluation circuit (25);
the processor (29; 35) is configured to, when the detector (28; 34) determines the occurrence of the duplication, perform a determination of whether a master (20) is omittable, including:
referring to the communication quality of each slave (10) with regard to each master (20) and determine candidates for locations showing communication quality of slaves which is higher than a predetermined criterion, and
determine whether a group of slaves (10) associated with a new master (20), which is placed in a location on the one or more power lines (L2) selected as a candidate, and a group of slaves (10) associated with an original master (20) contain one or more same slaves (10) in common, and whether a group of one or more slaves (10) associated with a master (20) newly placed in a location selected as a candidate and a group of one or more slaves (10) associated with one of existing masters (20) contain one or more same slaves (10) in common; and
the processor (29; 35) is configured to, in case two or more of existing masters (20) other than the newly placed master (20) are determined to be omittable, output a notification signal indicative of the location of the newly added master (20) and locations of masters (20) determined to be omittable.

14. The communication device according to any one of claims 11 to 13, wherein:
the multiple masters (20) are configured to communicate with each other;
a particular master (20A) of the multiple masters (20) includes an obtaining circuit (26; 32) configured to perform a request for the set to each of the multiple masters (20),
a comprehensive storage circuit (23) configured to store the set received by the obtaining circuit (26; 32),
the detector (28; 34), and
the processor (29; 35);
each of the multiple masters (20) further includes a read-out circuit (24) configured to read out the set from a storage circuit (23) of a master (20) including this read-out circuit (24) in response to the request and send the set to the obtaining circuit (26; 32);
the detector (28; 34) is configured to determine occurrence of the duplication with regard to the sets stored in the comprehensive storage circuit (23); and the communication device is used as the particular master (20A).

## Patentansprüche

1. Stromleitungskommunikationssystem, aufweisend:
mehrere Slaves (10);
mehrere Master (20), die mit den mehreren Slaves (10) über eine oder mehrere Stromleitungen (L2) verbunden sind;
einen Detektor (28; 34); und
einen Prozessor (29; 35),
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei Sätze der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
der Prozessor (29; 35) dazu eingerichtet ist, in einem Fall, bei dem der Detektor (28; 34) das Auftreten der Verdopplung feststellt, wenn mindestens einer von mindestens drei Sätzen der Sätze, die in den Speicherschaltkreisen (23) der mehreren Master (20) gespeichert sind, ein Teilsatz einer Vereinigung von verbleibenden Sätzen jedes der mindestens drei Sätze ist, eine Meldung auszugeben, dass ein Master (20), der dem Teilsatz entspricht, ausgelassen werden kann.

2. Stromleitungskommunikationssystem, aufweisend:
mehrere Slaves (10);
mehrere Master (20), die mit den mehreren Slaves (10) über eine oder mehrere Stromleitungen (L2) verbunden sind;
einen Detektor (28; 34); und
einen Prozessor (29; 35),
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei Sätze der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
der Prozessor (29; 35) dazu eingerichtet ist, in einem Fall, bei dem der Detektor (28; 34) das Auftreten der Verdopplung feststellt, und bei dem zwei Sätze der Sätze, die in den Speicherschaltkreisen (23) der mehreren Master (20) gespeichert sind, gemeinsam übereinstimmende Identifikationsinformationen enthalten, wenn einer der beiden Sätze ein Teilsatz des anderen der beiden Sätze ist, eine Meldung auszugeben, dass ein Master (20), der dem Teilsatz entspricht, ausgelassen werden kann.

3. Stromleitungskommunikationssystem, aufweisend:
mehrere Slaves (10);
mehrere Master (20), die mit den mehreren Slaves (10) über eine oder mehrere Stromleitungen (L2) verbunden sind;
einen Detektor (28; 34); und
einen Prozessor (29; 35),
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei Sätze der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
jeder der mehreren Master (20) ferner einen Berechnungsschaltkreis (25) enthält, der dazu eingerichtet ist, einen oder mehrere Berechnungswerte mit Blick auf eine Kommunikationsqualität für einen oder mehrere Slaves (10) zu berechnen, die durch Identifikationsinformationen identifiziert sind, die in dem Satz enthalten sind, der in einem Speicherschaltkreis (23) eines Master (20) gespeichert ist, der diesen Berechnungsschaltkreis (25) aufweist;
der Prozessor (29; 35) dazu eingerichtet ist, wenn der Detektor (28; 34) das Auftreten der Verdopplung feststellt, eine Entscheidung darüber durchzuführen, ob ein Master (20) ausgelassen werden kann, aufweisend:
Heranziehen der Kommunikationsqualität jedes Slaves (10) hinsichtlich jedes Masters (20) und Ermitteln von Kandidaten für Orte, die eine Kommunikationsqualität von Slaves aufzeigen, die ein vorbestimmtes Kriterium überschreitet, und
Ermitteln, ob eine Gruppe von Slaves (10), die einem neuen Master (20) zugeordnet sind, der an einem Ort auf der einen oder den mehreren Stromleitungen (L2) angeordnet ist, der als ein Kandidat ausgewählt ist, und eine Gruppe von Slaves (10), die einem ursprünglichen Master (20) zugeordnet sind, einen oder mehrere übereinstimmende Slaves (10) gemeinsam enthalten, und ob eine Gruppe eines oder mehrerer Slaves (10), die einem Master (20) zugeordnet sind, der neu an einem Ort angeordnet ist, der als ein Kandidat ausgewählt ist, und eine Gruppe eines oder mehrerer Slaves (10), die einem von bestehenden Mastern (20) zugeordnet sind, einen oder mehrere übereinstimmende Slaves (10) gemeinsam enthalten; und
der Prozessor (29; 35) dazu eingerichtet ist, im dem Falle, dass zwei oder mehrere von bestehenden Mastern (20), die sich von dem neu angeordneten Master (20) unterscheiden, als auslassbar ermittelt sind, ein Meldungssignals auszugeben, das für den Ort des soeben hinzugefügten Masters (20) und für Orte von Mastern (20), die als auslassbar ermittelt sind, kennzeichnend ist.

4. Stromleitungskommunikationssystem nach einem beliebigen der Ansprüche 1 bis 3, wobei
der Prozessor (29; 35) dazu eingerichtet ist, die übereinstimmenden Identifikationsinformationen in dem Vorgang nicht von einem der mindestens zwei Sätze zu entfernen, sondern die übereinstimmenden Identifikationsinformationen von einem oder mehreren übrigen Sätzen der mindestens zwei Sätze zu entfernen.

5. Stromleitungskommunikationssystem nach einem beliebigen der Ansprüche 1 bis 4, wobei:
jeder der mehreren Master (20) ferner einen Berechnungsschaltkreis (25) enthält, der dazu eingerichtet ist, einen oder mehrere Berechnungswerte mit Blick auf eine Kommunikationsqualität für einen oder mehrere Slaves (10) zu berechnen, die durch Identifikationsinformationen identifiziert sind, die in dem Satz enthalten sind, der in einem Speicherschaltkreis (23) eines Master (20) gespeichert ist, der diesen Berechnungsschaltkreis (25) aufweist; und
der Prozessor (29; 35) dazu eingerichtet ist, in dem Vorgang die übereinstimmenden Identifikationsinformationen nicht aus einem Satz zu entfernen, der einer der mindestens zwei Sätze ist und zu einem Master (20) gehört, der hinsichtlich des Berechnungswerts für die übereinstimmenden Identifikationsinformationen der größte ist, sondern die übereinstimmenden Identifikationsinformationen von einem oder mehreren übrigen Sätzen der mindestens zwei Sätze zu entfernen.

6. Stromleitungskommunikationssystem nach einem beliebigen der Ansprüche 1 bis 5, wobei:
der Prozessor (29; 35) dazu eingerichtet ist, wenn zwei Sätze der Sätze, die in den Speicherschaltkreisen (23) der mehreren Master (20) gespeichert sind, gemeinsam übereinstimmende Identifikationsinformationen enthalten, in dem Vorgang die übereinstimmenden Identifikationsinformationen von nur einem der zwei Sätze zu entfernen.

7. Stromleitungskommunikationssystem nach Anspruch 6, wobei:
jeder der mehreren Master (20) ferner einen Berechnungsschaltkreis (25) enthält, der dazu eingerichtet ist, einen oder mehrere Berechnungswerte mit Blick auf eine Kommunikationsqualität für einen oder mehrere Slaves (10) zu berechnen, die durch Identifikationsinformationen identifiziert sind, die in dem Satz enthalten sind, der in einem Speicherschaltkreis (23) eines Master (20) gespeichert ist, der diesen Berechnungsschaltkreis (25) aufweist; und
der Prozessor (29; 35) dazu eingerichtet ist, wenn zwei der Sätze gemeinsam übereinstimmende Identifikationsinformationen enthalten, in dem Vorgang die übereinstimmenden Identifikationsinformationen aus einem Satz zu entfernen, der einer der beiden Sätze ist und zu einem Master (20) gehört, der hinsichtlich des Berechnungswerts für die übereinstimmenden Identifikationsinformationen kleiner ist.

8. Stromleitungskommunikationssystem nach einem beliebigen der Ansprüche 1 bis 7, das ferner eine externe Vorrichtung aufweist, die dazu eingerichtet ist, mit jedem der mehreren Master (20) zu kommunizieren,
wobei die externe Einrichtung enthält:
einen Erlangungsschaltkreis (26; 32), der dazu eingerichtet ist, an jeden der mehreren Master (20) eine Anforderung nach dem Satz durchzuführen;
einen umfassenden Speicherschaltkreis (27; 33), der dazu eingerichtet ist, den Satz, der durch den Erlangungsschaltkreis (26; 32) empfangen ist, zu speichern;
den Detektor (28; 34); und
den Prozessor (29; 35),
wobei jeder der mehreren Master (20) außerdem einen Ausleseschaltkreis (24) aufweist, der dazu eingerichtet ist, den Satz aus einem Speicherschaltkreis (23) eines Masters (20), der diesen Ausleseschaltkreis (24) aufweist, in Antwort auf die Anforderung des Erlangungsschaltkreises (26; 32) auszulesen und den Satz zu dem Erlangungsschaltkreis (26; 32) zu senden, und
wobei der Detektor (28; 34) dafür eingerichtet ist, ein Auftreten der Verdopplung hinsichtlich der Sätze zu ermitteln, die in dem umfassenden Speicherschaltkreis (27; 33) gespeichert sind.

9. Stromleitungskommunikationssystem nach einem beliebigen der Ansprüche 1 bis 7, wobei:
die mehreren Master (20) dazu eingerichtet sind, miteinander zu kommunizieren; wobei wenigstens einer der mehreren Master (20) enthält:
einen Erlangungsschaltkreis (26; 32), der dazu eingerichtet ist, an jeden der mehreren Master (20) eine Anforderung nach dem Satz durchzuführen,
einen umfassenden Speicherschaltkreis (27; 33), der dazu eingerichtet ist, den Satz, der durch den Erlangungsschaltkreis (26; 32) aufgenommen ist, zu speichern,
den Detektor (28; 34), und
den Prozessor (29; 35);
jeder der mehreren Master (20) ferner einen Ausleseschaltkreis (24) enthält, der dazu eingerichtet ist, den Satz aus einem Speicherschaltkreis (23) eines Masters (20), der diesen Ausleseschaltkreis (24) aufweist, in Antwort auf die Anforderung auszulesen und den Satz zu dem Erlangungsschaltkreis (26; 32) zu senden; und
der Detektor (28; 34) dazu eingerichtet ist, ein Auftreten der Verdopplung hinsichtlich der Sätze zu ermitteln, die in dem umfassenden Speicherschaltkreis (27; 33) gespeichert sind.

10. Stromleitungskommunikationssystem nach einem beliebigen der Ansprüche 1 bis 9,
wobei die Identifikationsinformationen für jeden der mehreren Slaves (10) eindeutig sind.

11. Kommunikationsvorrichtung, die als ein Master von mehreren Mastern (20) eines Stromleitungskommunikationssystems verwendet wird,
wobei das Stromleitungskommunikationssystem mehrere Slaves (10), mehrere Master (20), die mit den mehreren Slaves (10) über eine oder mehrere Stromleitungen (L2) verbunden sind, einen Detektor (28; 34) und einen Prozessor (29; 35) enthält,
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
der Prozessor (29; 35) dazu eingerichtet ist, in einem Fall, bei dem der Detektor (28; 34) das Auftreten der Verdopplung feststellt, wenn mindestens einer von mindestens drei Sätzen der Sätze, die in den Speicherschaltkreisen (23) der mehreren Master (20) gespeichert sind, ein Teilsatz einer Vereinigung von verbleibenden Sätzen jedes der mindestens drei Sätze ist, eine Meldung auszugeben, dass ein Master (20), der dem Teilsatz entspricht, ausgelassen werden kann.

12. Kommunikationsvorrichtung, die als ein Master von mehreren Mastern (20) eines Stromleitungskommunikationssystems verwendet wird,
wobei das Stromleitungskommunikationssystem mehrere Slaves (10), mehrere Master (20), die mit den mehreren Slaves (10) über eine oder mehrere Stromleitungen (L2) verbunden sind, einen Detektor (28; 34) und einen Prozessor (29; 35) enthält,
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
der Prozessor (29; 35) dazu eingerichtet ist, in einem Fall, bei dem der Detektor (28; 34) das Auftreten der Verdopplung feststellt, und bei dem zwei Sätze der Sätze, die in den Speicherschaltkreisen (23) der mehreren Master (20) gespeichert sind, gemeinsam übereinstimmende Identifikationsinformationen enthalten, wenn einer der beiden Sätze ein Teilsatz des anderen der beiden Sätze ist, eine Meldung auszugeben, dass ein Master (20), der dem Teilsatz entspricht, ausgelassen werden kann.

13. Kommunikationsvorrichtung, die als ein Master von mehreren Mastern (20) eines Stromleitungskommunikationssystems verwendet wird,
wobei das Stromleitungskommunikationssystem mehrere Slaves (10), mehrere Master (20), die mit den mehreren Slaves (10) über eine oder mehrere Stromleitungen (L2) verbunden sind, einen Detektor (28; 34) und einen Prozessor (29; 35) enthält,
wobei jeder der mehreren Master (20), die einen Speicherschaltkreis (23) aufweisen, der dazu eingerichtet ist, einen Satz von Identifikationsinformationen von Slaves (10) zu speichern, die zu den mehreren Slaves (10) gehören und denen erlaubt ist, mit einem Master (20) zu kommunizieren, der diesen Speicherschaltkreis (23) aufweist, dafür ausgelegt ist, über die eine oder die mehreren Stromleitungen (L2) mit einem oder mehreren Slaves (10) zu kommunizieren, die durch Identifikationsinformationen identifiziert sind, die in dem Satz enthalten sind, der in dem Speicherschaltkreis (23) davon gespeichert ist,
wobei der Detektor (28; 34) dazu eingerichtet ist, wenn mindestens zwei der Sätze, die in den Speicherschaltkreisen (23) der mehreren Master (20) gespeichert sind, gemeinsam übereinstimmende Identifikationsinformationen enthalten, ein Auftreten einer Verdopplung von Identifikationsinformationen festzustellen, und
wobei der Prozessor (29; 35) dazu eingerichtet ist, wenn der Detektor (28; 34) das Auftreten der Verdopplung feststellt, einen Vorgang einer Zuordnung jedes der mehreren Slaves (10) zu einem beliebigen der mehreren Master (20) durchzuführen, um die Verdopplung zu eliminieren,
**dadurch gekennzeichnet, dass**
jeder der mehreren Master (20) ferner einen Berechnungsschaltkreis (25) enthält, der dazu eingerichtet ist, einen oder mehrere Berechnungswerte mit Blick auf eine Kommunikationsqualität für einen oder mehrere Slaves (10) zu berechnen, die durch Identifikationsinformationen identifiziert sind, die in dem Satz enthalten sind, der in einem Speicherschaltkreis (23) eines Master (20) gespeichert ist, der diesen Berechnungsschaltkreis (25) aufweist;
der Prozessor (29; 35) dazu eingerichtet ist, wenn der Detektor (28; 34) das Auftreten der Verdopplung feststellt, eine Entscheidung darüber durchzuführen, ob ein Master (20) ausgelassen werden kann, aufweisend:
Heranziehen der Kommunikationsqualität jedes Slaves (10) hinsichtlich jedes Masters (20) und Ermitteln von Kandidaten für Orte, die eine Kommunikationsqualität von Slaves aufzeigen, die ein vorbestimmtes Kriterium überschreitet, und
Ermitteln, ob eine Gruppe von Slaves (10), die einem neuen Master (20) zugeordnet sind, der an einem Ort auf der einen oder den mehreren Stromleitungen (L2) angeordnet ist, der als ein Kandidat ausgewählt ist, und eine Gruppe von Slaves (10), die einem ursprünglichen Master (20) zugeordnet sind, einen oder mehrere übereinstimmende Slaves (10) gemeinsam enthalten, und ob eine Gruppe eines oder mehrerer Slaves (10), die einem Master (20) zugeordnet sind, der an einem Ort neu angeordnet ist, der als ein Kandidat ausgewählt ist, und eine Gruppe eines oder mehrerer Slaves (10), die einem von bestehenden Mastern (20) zugeordnet sind, einen oder mehrere übereinstimmende Slaves (10) gemeinsam enthalten; und
der Prozessor (29; 35) dazu eingerichtet ist, im dem Falle, dass zwei oder mehrere von bestehenden Mastern (20), die sich von dem neu angeordneten Master (20) unterscheiden, als auslassbar ermittelt sind, ein Meldungssignals auszugeben, das für den Ort des soeben hinzugefügten Masters (20) und für Orte von Mastern (20), die als auslassbar ermittelt sind, kennzeichnend ist.

14. Die Kommunikationsvorrichtung nach einem beliebigen der Ansprüche 11 bis 13, wobei:
die mehreren Master (20) dazu eingerichtet sind, miteinander zu kommunizieren; wobei
ein spezieller Master (20A) der mehreren Master (20) enthält:
einen Erlangungsschaltkreis (26; 32), der dazu eingerichtet ist, an jeden der mehreren Master (20) eine Anforderung nach dem Satz durchzuführen;
einen umfassenden Speicherschaltkreis (23), der dazu eingerichtet ist, den Satz, der durch den Erlangungsschaltkreis (26; 32) aufgenommen ist, zu speichern,
den Detektor (28; 34), und
den Prozessor (29; 35);
wobei jeder der mehreren Master (20) ferner einen Ausleseschaltkreis (24) enthält, der dazu eingerichtet ist, den Satz aus einem Speicherschaltkreis (23) eines Masters (20), der diesen Ausleseschaltkreis (24) aufweist, in Antwort auf die Anforderung auszulesen und den Satz zu dem Erlangungsschaltkreis (26; 32) zu senden; und
wobei der Detektor (28; 34) dazu eingerichtet ist, hinsichtlich der Sätze, die in dem umfassenden Speicherschaltkreis (23) gespeichert sind, ein Auftreten der Verdopplung zu ermitteln; und wobei
die Kommunikationsvorrichtung als der spezielle Master (20A) verwendet wird.

## Revendications

1. Système de communication par ligne électrique, comportant :
de multiples esclaves (10) ;
de multiples maîtres (20) connectés aux multiples esclaves (10) par l'intermédiaire d'une ou plusieurs lignes électriques (L2) ;
un détecteur (28 ; 34) ; et
un processeur (29 ; 35) ;
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
le processeur (29 ; 35) est configuré de manière à, dans un cas où le détecteur (28 ; 34) détermine l'occurrence de la duplication, lorsqu'au moins l'un d'au moins trois ensembles des ensembles stockés dans les circuits de stockage (23) des multiples maîtres (20) est un sous-ensemble d'une union d'ensembles restants desdits au moins trois ensembles, donner une annonce selon laquelle un maître (20) correspondant au sous-ensemble peut être omis.

2. Système de communication par ligne électrique, comportant :
de multiples esclaves (10) ;
de multiples maîtres (20) connectés aux multiples esclaves (10) par l'intermédiaire d'une ou plusieurs lignes électriques (L2) ;
un détecteur (28 ; 34) ; et
un processeur (29 ; 35) ;
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
le processeur (29 ; 35) est configuré de manière à, dans un cas où le détecteur (28 ; 34) détermine l'occurrence de la duplication, et où deux ensembles des ensembles stockés dans les circuits de stockage (23) des multiples maîtres (20) contiennent des informations d'identification identiques en commun, lorsque l'un des deux ensembles est un sous-ensemble de l'autre des deux ensembles, donner une annonce selon laquelle un maître (20) correspondant au sous-ensemble peut être omis.

3. Système de communication par ligne électrique, comportant :
de multiples esclaves (10) ;
de multiples maîtres (20) connectés aux multiples esclaves (10) par l'intermédiaire d'une ou plusieurs lignes électriques (L2) ;
un détecteur (28 ; 34) ; et
un processeur (29 ; 35) ;
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
chacun des multiples maîtres (20) inclut en outre un circuit d'évaluation (25) configuré de manière à calculer une ou plusieurs valeurs d'évaluation en termes de qualité de communication pour un ou plusieurs esclaves (10) identifiés par des informations d'identification contenues dans l'ensemble stocké dans un circuit de stockage (23) d'un maître (20) incluant ce circuit d'évaluation (25) ;
le processeur (29 ; 35) est configuré de manière à, lorsque le détecteur (28 ; 34) détermine l'occurrence de la duplication, mettre en oeuvre une détermination consistant à déterminer si un maître (20) peut être omis, incluant les étapes ci-dessous consistant à
faire référence à la qualité de communication de chaque esclave (10) en ce qui concerne chaque maître (20), et déterminer des candidats pour des emplacements indiquant une qualité de communication d'esclaves qui est supérieure à un critère prédéterminé ; et
déterminer si un groupe d'esclaves (10) associé à un nouveau maître (20), qui est placé dans un emplacement sur ladite une ou lesdites plusieurs lignes électriques (L2), sélectionné en qualité de candidat, et un groupe d'esclaves (10) associé à un maître d'origine (20), contiennent un ou plusieurs esclaves identiques (10) en commun, et déterminer si un groupe d'un ou plusieurs esclaves (10), associé à un maître (20) nouvellement placé dans un emplacement sélectionné en qualité de candidat, et un groupe d'un ou plusieurs esclaves (10), associé à l'un parmi des maîtres existants (20), contiennent un ou plusieurs esclaves identiques (10) en commun ; et
le processeur (29 ; 35) est configuré de manière à, dans le cas où deux maîtres existants ou plus (20), distincts du maître nouvellement placé (20), sont déterminés comme pouvant être omis, délivrer en sortie un signal de notification indicatif de l'emplacement du maître nouvellement ajouté (20) et d'emplacements de maîtres (20) déterminés comme pouvant être omis.

4. Système de communication par ligne électrique selon l'une quelconque des revendications 1 à 3, dans lequel :
le processeur (29 ; 35) est configuré de manière à, au cours du processus, ne pas supprimer les informations d'identification identiques de l'un desdits au moins deux ensembles, mais supprimer les informations d'identification identiques d'un ou plusieurs ensembles restants desdits au moins deux ensembles.

5. Système de communication par ligne électrique selon l'une quelconque des revendications 1 à 4, dans lequel :
chacun des multiples maîtres (20) inclut en outre un circuit d'évaluation (25) configuré de manière à calculer une ou plusieurs valeurs d'évaluation en termes de qualité de communication pour un ou plusieurs esclaves (10) identifiés par des informations d'identification contenues dans l'ensemble stocké dans un circuit de stockage (23) d'un maître (20) incluant ce circuit d'évaluation (25) ; et
le processeur (29 ; 35) est configuré de manière à, au cours du processus, ne pas supprimer les informations d'identification identiques d'un ensemble qui correspond à l'un desdits au moins deux ensembles et est détenu par un maître (20) qui est le plus grand dans la valeur d'évaluation pour les informations d'identification identiques, mais supprimer les informations d'identification identiques d'un ou plusieurs ensembles restants desdits au moins deux ensembles.

6. Système de communication par ligne électrique selon l'une quelconque des revendications 1 à 5, dans lequel :
le processeur (29 ; 35) est configuré de manière à, lorsque deux ensembles des ensembles stockés dans les circuits de stockage (23) des multiples maîtres (20) contiennent des informations d'identification identiques en commun, supprimer les informations d'identification identiques de seulement l'un des deux ensembles, au cours du processus.

7. Système de communication par ligne électrique selon la revendication 6, dans lequel :
chacun des multiples maîtres (20) inclut en outre un circuit d'évaluation (25) configuré de manière à calculer une ou plusieurs valeurs d'évaluation en termes de qualité de communication pour un ou plusieurs esclaves (10) identifiés par des informations d'identification contenues dans l'ensemble stocké dans un circuit de stockage (23) d'un maître (20) incluant ce circuit d'évaluation (25) ; et
le processeur (29 ; 35) est configuré de manière à, lorsque deux des ensembles contiennent des informations d'identification identiques en commun, supprimer les informations d'identification identiques d'un ensemble qui correspond à l'un des deux ensembles et est détenu par un maître (20) qui est plus petit dans la valeur d'évaluation pour les informations d'identification identiques, au cours du processus.

8. Système de communication par ligne électrique selon l'une quelconque des revendications 1 à 7, comportant en outre un dispositif externe configuré de manière à communiquer avec chacun des multiples maîtres (20),
le dispositif externe incluant :
un circuit d'obtention (26 ; 32) configuré de manière à mettre en oeuvre une demande concernant l'ensemble auprès de chacun des multiples maîtres (20) ;
un circuit de stockage complet (27 ; 33) configuré de manière à stocker l'ensemble reçu par le circuit d'obtention (26 ; 32) ;
le détecteur (28 ; 34) ; et
le processeur (29 ; 35),
chacun des multiples maîtres (20) incluant en outre un circuit de lecture (24) configuré de manière à lire l'ensemble à partir d'un circuit de stockage (23) d'un maître (20) incluant ce circuit de lecture (24), en réponse à la demande provenant du circuit d'obtention (26 ; 32), et à envoyer l'ensemble au circuit d'obtention (26 ; 32) ; et
le détecteur (28 ; 34) étant configuré de manière à déterminer l'occurrence de la duplication en ce qui concerne les ensembles stockés dans le circuit de stockage complet (27 ; 33).

9. Système de communication par ligne électrique selon l'une quelconque des revendications 1 à 7, dans lequel :
les multiples maîtres (20) sont configurés de manière à communiquer entre eux ;
au moins l'un des multiples maîtres (20) inclut ;
un circuit d'obtention (26 ; 32) configuré de manière à mettre en oeuvre une demande concernant l'ensemble auprès de chacun des multiples maîtres (20) ;
un circuit de stockage complet (27 ; 33) configuré de manière à stocker l'ensemble reçu par le circuit d'obtention (26 ; 32) ;
le détecteur (28 ; 34) ; et
le processeur (29 ; 35) ;
chacun des multiples maîtres (20) inclut en outre un circuit de lecture (24) configuré de manière à lire l'ensemble à partir d'un circuit de stockage (23) d'un maître (20) incluant ce circuit de lecture (24), en réponse à la demande, et à envoyer l'ensemble au circuit d'obtention (26 ; 32) ; et
le détecteur (28 ; 34) est configuré de manière à déterminer l'occurrence de la duplication en ce qui concerne les ensembles stockés dans le circuit de stockage complet (27 ; 33).

10. Système de communication par ligne électrique selon l'une quelconque des revendications 1 à 9, dans lequel les informations d'identification sont uniques à chacun des multiples esclaves (10).

11. Dispositif de communication utilisé en tant que l'un parmi de multiples maîtres (20) d'un système de communication par ligne électrique,
le système de communication par ligne électrique incluant de multiples esclaves (10), les multiples maîtres (20) connectés aux multiples esclaves (10) par l'intermédiaire d'une ou plusieurs lignes électriques (L2), un détecteur (28 ; 34), et un processeur (29 ; 35) ;
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
le processeur (29 ; 35) est configuré de manière à, dans un cas où le détecteur (28 ; 34) détermine l'occurrence de la duplication, lorsqu'au moins l'un d'au moins trois ensembles des ensembles stockés dans les circuits de stockage (23) des multiples maîtres (20) est un sous-ensemble d'une union d'ensembles restants desdits au moins trois ensembles, donner une annonce selon laquelle un maître (20) correspondant au sous-ensemble peut être omis.

12. Dispositif de communication utilisé en tant que l'un parmi de multiples maîtres (20) d'un système de communication par ligne électrique,
le système de communication par ligne électrique incluant de multiples esclaves (10), les multiples maîtres (20) connectés aux multiples esclaves (10) par l'intermédiaire d'une ou plusieurs lignes électriques (L2), un détecteur (28 ; 34), et un processeur (29 ; 35) ;
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
le processeur (29 ; 35) est configuré de manière à, dans un cas où le détecteur (28 ; 34) détermine l'occurrence de la duplication, et où deux ensembles des ensembles stockés dans les circuits de stockage (23) des multiples maîtres (20) contiennent des informations d'identification identiques en commun, lorsque l'un des deux ensembles est un sous-ensemble de l'autre des deux ensembles, donner une annonce selon laquelle un maître (20) correspondant au sous-ensemble peut être omis.

13. Dispositif de communication utilisé en tant que l'un parmi de multiples maîtres (20) d'un système de communication par ligne électrique,
le système de communication par ligne électrique incluant de multiples esclaves (10), les multiples maîtres (20) connectés aux multiples esclaves (10) par l'intermédiaire d'une ou plusieurs lignes électriques (L2), un détecteur (28 ; 34), et un processeur (29 ; 35),
chacun des multiples maîtres (20) incluant un circuit de stockage (23) configuré de manière à stocker un ensemble d'informations d'identification d'esclaves (10) qui appartiennent aux multiples esclaves (10) et sont autorisés à communiquer avec un maître (20) incluant ce circuit de stockage (23), et étant configuré de manière à communiquer, par l'intermédiaire de ladite une ou desdites plusieurs lignes électriques (L2), avec un ou plusieurs esclaves (10) identifiés par des informations d'identification contenues dans l'ensemble stocké dans le circuit de stockage (23) connexe ;
le détecteur (28 ; 34) étant configuré de manière à, lorsqu'au moins deux ensembles des ensembles stockés dans les circuits de stockage (23) des multiples maîtres (20) contiennent des informations d'identification identiques en commun, déterminer l'occurrence d'une duplication d'informations d'identification ; et
le processeur (29 ; 35) étant configuré de manière à, lorsque le détecteur (28 ; 34) détermine l'occurrence de la duplication, mettre en oeuvre un processus consistant à associer chacun des multiples esclaves (10) à l'un quelconque des multiples maîtres (20) en vue d'éliminer la duplication ;
**caractérisé en ce que** :
chacun des multiples maîtres (20) inclut en outre un circuit d'évaluation (25) configuré de manière à calculer une ou plusieurs valeurs d'évaluation en termes de qualité de communication pour un ou plusieurs esclaves (10) identifiés par des informations d'identification contenues dans l'ensemble stocké dans un circuit de stockage (23) d'un maître (20) incluant ce circuit d'évaluation (25) ;
le processeur (29 ; 35) est configuré de manière à, lorsque le détecteur (28 ; 34) détermine l'occurrence de la duplication, mettre en oeuvre une détermination consistant à déterminer si un maître (20) peut être omis, incluant les étapes ci-dessous consistant à
faire référence à la qualité de communication de chaque esclave (10) en ce qui concerne chaque maître (20), et déterminer des candidats pour des emplacements indiquant une qualité de communication d'esclaves qui est supérieure à un critère prédéterminé ; et
déterminer si un groupe d'esclaves (10) associé à un nouveau maître (20), qui est placé dans un emplacement sur ladite une ou lesdites plusieurs lignes électriques (L2), sélectionné en qualité de candidat, et un groupe d'esclaves (10) associé à un maître d'origine (20), contiennent un ou plusieurs esclaves identiques (10) en commun, et
déterminer si un groupe d'un ou plusieurs esclaves (10), associé à un maître (20) nouvellement placé dans un emplacement sélectionné en qualité de candidat, et un groupe d'un ou plusieurs esclaves (10), associé à l'un parmi des maîtres existants (20), contiennent un ou plusieurs esclaves identiques (10) en commun ; et
le processeur (29 ; 35) est configuré de manière à, dans le cas où deux maîtres existants ou plus (20), distincts du maître nouvellement placé (20), sont déterminés comme pouvant être omis, délivrer en sortie un signal de notification indicatif de l'emplacement du maître nouvellement ajouté (20) et d'emplacements de maîtres (20) déterminés comme pouvant être omis.

14. Dispositif de communication selon l'une quelconque des revendications 11 à 13, dans lequel :
les multiples maîtres (20) sont configurés de manière à communiquer entre eux ;
un maître spécifique (20A) des multiples maîtres (20) inclut :
un circuit d'obtention (26 ; 32) configuré de manière à mettre en oeuvre une demande concernant un ensemble auprès de chacun des multiples maîtres (20) ;
un circuit de stockage complet (23) configuré de manière à stocker l'ensemble reçu par le circuit d'obtention (26 ; 32) ;
le détecteur (28 ; 34) ; et
le processeur (29 ; 35) ;
chacun des multiples maîtres (20) inclut en outre un circuit de lecture (24) configuré de manière à lire l'ensemble à partir d'un circuit de stockage (23) d'un maître (20) incluant ce circuit de lecture (24), en réponse à la demande, et à envoyer l'ensemble au circuit d'obtention (26 ; 32) ;
le détecteur (28 ; 34) est configuré de manière à déterminer l'occurrence de la duplication en ce qui concerne les ensembles stockés dans le circuit de stockage complet (23) ; et
le dispositif de communication est utilisé en tant que le maître spécifique (20A).
